Europäisches Patentamt

European Patent Office

Office européen des brevets

(11) Publication number: **0 036 458**
**B1**

# EUROPEAN PATENT SPECIFICATION

(45) Date of publication of patent specification: **26.09.84**

(21) Application number: **80300881.2**

(22) Date of filing: **21.03.80**

(51) Int. Cl.³: **B 23 Q 35/123,** B 23 Q 35/06

(54) Tracer control apparatus.

(43) Date of publication of application:
**30.09.81 Bulletin 81/39**

(45) Publication of the grant of the patent:
**26.09.84 Bulletin 84/39**

(84) Designated Contracting States:
**DE FR GB**

(56) References cited:
**EP-A-0 014 563**
**DE-B-1 199 855**
**GB-A-1 497 562**
**GB-A-2 017 344**
**US-A-4 064 445**

(73) Proprietor: **FANUC LTD**
**5-1, Asahigaoka 3-chome Hino-shi**
**Tokyo 191 (JP)**

(72) Inventor: **Imazeki, Ryoji**
**No. 987-44, Naganuma-cho**
**Hachioji-shi, Tokyo (JP)**
Inventor: **Yamazaki, Etuo**
**No. 566-93, Shimoongata-cho**
**Hachioji-shi, Tokyo (JP)**

(74) Representative: **Bedggood, Guy Stuart et al**
**Haseltine Lake & Co. Hazlitt House 28**
**Southampton Buildings Chancery Lane**
**London WC2A 1AT (GB)**

Courier Press, Leamington Spa, England.

## Description

This invention relates to tracer control apparatus.

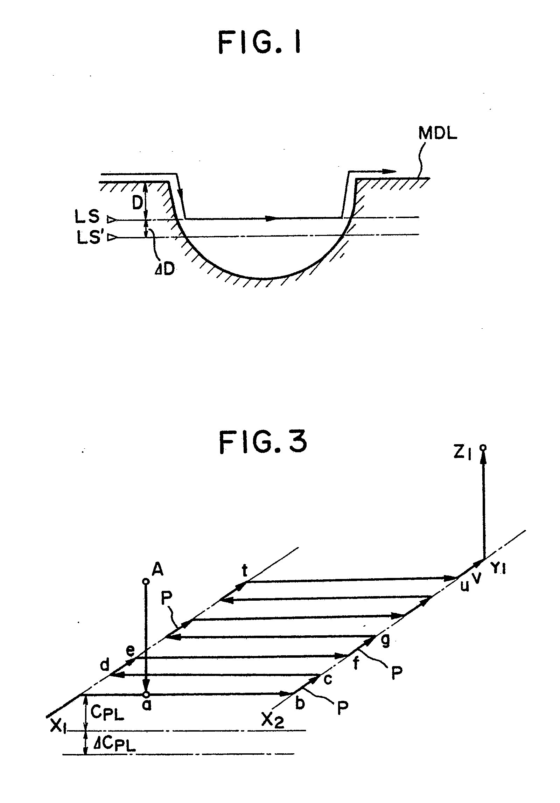

In clamp tracing in accordance with conventional tracer control, for example as shown in Fig. 1 of the accompanying drawings, which is sectional diagram illustrating schematically clamp tracing of a model surface, a limit switch LS is provided at a selected depth D in relation to a model MDL to be traced, at which depth clamp feed is to be effected (which depth will hereinafter be referred to as a clamp level). When the limit switch LS is turned ON by the movement of the tracer head, feed in the direction of depth of the model MDL is terminated and a tracing stylus is then moved horizontally without contacting the surface of the model MDL until tracing is re-started from the position at which the stylus again contacts the surface of model MDL. Upon completion of one machining operation, the position of the limit switch is changed, for example it is lowered by a predetermined amount $\Delta D$ to a position LS', whereupon clamp tracing takes place again at a new depth $D+\Delta D$ so that the workpiece is cut again (by a predetermined amount corresponding to $\Delta D$). By repeating such operations, the configuration of the model MDL is finally traced out down to its greatest depths. Thus, since conventional control calls for a limit switch, the reliability of clamp tracing operations is relatively low because of the mechanical nature of the operation of the limit switch, and since the position of the limit switch must be changed after each machining operation, it is difficult to continue machining operations from rough to finished workpiece without significant breaks, and thereby working time is extended.

GB—A—2 017 344 discloses tracer apparatus operable to control tracer machining on the basis of displacement signals from a tracer head tracing a model surface. The apparatus has a memory for holding data determining tracing operations to be effected, and a processor operable to read out data from the memory and in dependence upon the read out data to provide control signals to effect the tracing operations.

EP—A—14563, which falls under Article 54, paragraph 3 EPC, discloses tracer control apparatus for controlling clamp feeds.

Attention is also directed to DE—B—1 199 855.

According to the present invention there is provided tracer control apparatus operable to control tracer machining on the basis of displacement signals ($\varepsilon_x$, $\varepsilon_y$, $\varepsilon_z$) from a 3-dimensional tracer head (TR) of tracer machining apparatus tracing a model (MDL) surface, the tracer control apparatus comprising

a memory (MEM) holding data determining tracing operations to be effected, including clamp tracing data designating an initial clamp level for clamp feed during a first tracing operation, and data determining successive further clamp levels for clamp feed during successive further tracing operations,

a processor (CPU) operable to read out data held in the memory, and in dependence upon read out data, to provide control signals for tracer machining apparatus to effect said tracing operations, and with

means (CPU, MEM, CLP) operable to control switching to clamp feed, during such a tracing operation, in dependence upon the clamp level designated for clamp feed during the tracing operation concerned, and operable to control switching from clamp feed in dependence upon said displacement signals ($\varepsilon_x$, $\varepsilon_y$, $\varepsilon_z$).

An embodiment of the present invention provides tracer control apparatus in which clamp level is changed automatically by a predetermined value after each machining operation, so that clamp tracing can be performed continuously from rough to finished machining.

An embodiment of the present invention provides tracer control apparatus in which data relating to a clamp level is prestored in a memory and clamp feed points are controlled in accordance with the stored data to enable continuous tracing from rough to finish to take place, thereby reducing machining time.

Reference is made, by way of example, to the accompanying drawings, in which:—

Fig. 1, as mentioned above, is a sectional diagram illustrating schematically conventional clamp profiling;

Fig. 2 is a block diagram illustrating tracer control apparatus embodying the present invention;

Fig. 3 is a schematic diagram explanatory of one example of a tracing path for assistance in explanation of the present invention; and

Fig. 4 is a flowchart explanatory of operations in the apparatus of Fig. 2.

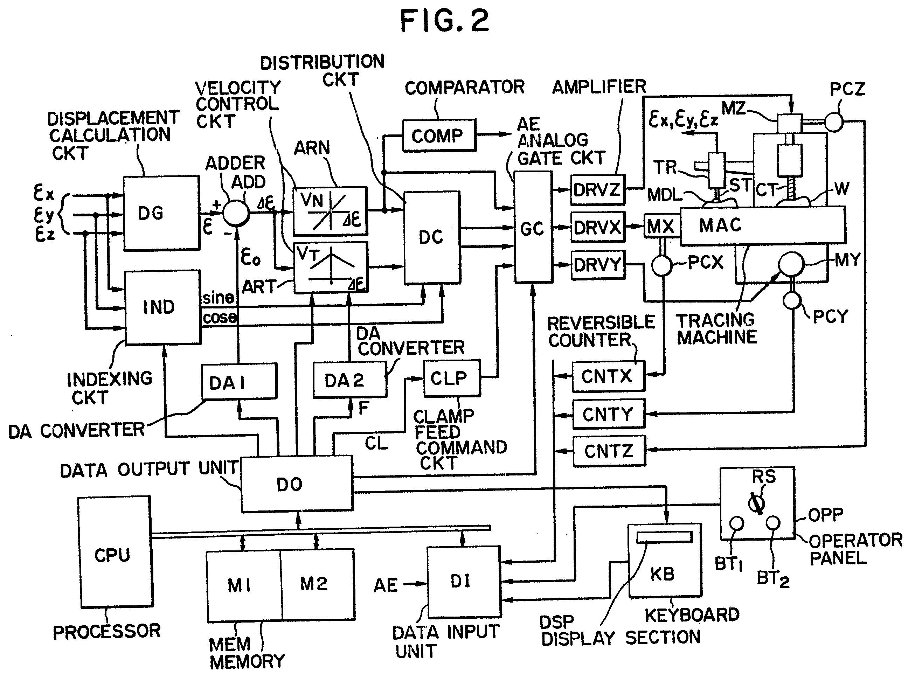

Fig. 2 is a block diagram illustrating tracer control apparatus embodying the present invention. In Fig. 2, DG and IND respectively indicate a displacement calculation circuit and an indexing circuit which are both supplied with displacement signals $\varepsilon_x$, $\varepsilon_y$ and $\varepsilon_z$ from a tracer head TR of tracer machining apparatus; ARN and ART are velocity control circuits; ADD is an adder; DC is a distribution circuit; COMP is a comparator; GC is an analog gate circuit; DRVX, DRVY and DRVZ are amplifiers; MX, MY and MZ are servo motors; PCX, PCY and PCZ are position detectors, MDL is a model; ST is a stylus; CT is a cutter; W is a workpiece; MAC is a tracing machine; CNTX, CNTY and CNTZ are reversible counters which count pulses from the position detectors to indicate the current position of the stylus; CLP is a

2

clamp feed command circuit; OPP is an operator panel; RS is a setting dial for velocity or the like; BT1 and BT2 are push buttons; KB is a keyboard; DSP is a display of the keyboard; DI is a data input unit; MEM is a memory having a data memory part M1 and a control program part M2; DO is a data output unit; CPU is a processor; and DA1 and DA2 are D-A converters. The apparatus may also have a manual operation control circuit (not shown) feeding into the analog gate circuit GC, for manual control of tracer operations.

The stylus ST held in contact with the surface of the model MDL is fed by the servo motors and the displacement calculation circuit DG derives a composite displacement signal

$$\varepsilon = \sqrt{\varepsilon_x{}^2 + \varepsilon_y{}^2 + \varepsilon_z{}^2}$$

from displacement signals $\varepsilon_x$, $\varepsilon_y$ and $\varepsilon_z$ corresponding to the displacement of the stylus ST, and the indexing circuit IND provides direction-of-displacement signals $\sin \theta$ and $\cos \theta$. The composite displacement signal $\varepsilon$ is applied to the adder ADD to obtain a difference $\Delta\varepsilon$ between the composite signal $\varepsilon$ and a reference deflection or displacement signal $\varepsilon_0$, which difference $\Delta\varepsilon$ is delivered to the velocity control circuits ARN and ART to obtain a normal-direction velocity signal $V_N$ and a tangential-direction velocity signal $V_T$. These signals $V_N$ and $V_T$ are applied to the distribution circuit DC to yield a velocity command signal in accordance with the direction-of-displacement signals $\sin \theta$ and $\cos \theta$, and the velocity command signal thus obtained is supplied to the analog gate circuit GC. The velocity command signal is then delivered to that one of the amplifiers DRVX, DRVY and DRVZ which is selected by the analog gate circuit GC. By means of the velocity command signal thus delivered, the servo motor corresponding to the selected amplifier is driven to feed the cutter CT and the tracer head TR in ganged relation to each other. Since the operation described above are already well-known in the art, no detailed description will be given.

In apparatus embodying the present invention tracing operation data including data relating to clamp level is entered from a source such as the keyboard KB for example for storage in the memory MEM, from which the data is read out as tracing operations proceed, and in accordance with the read out data, a tracing path including clamp level is controlled. That is, apparatus embodying the present invention permits continuous machining operations from rough machining to finishing machining by automatically changing the clamp level for each machining operation in accordance with stored data concerning the clamp level, without involving manual operations such as are needed in previous tracer apparatus. As input data, use can be made of such data as is shown in the following tables, for example.

**O 036 458**

TABLE 1

| Item | Symbol | Code |
|---|---|---|
| Mode | (See Table 2) | AO1 |
| Deflection | $\varepsilon_0$ | AO2 |
| Approach Axis | X, Y, Z | AO3 |
| Direction of Approach | +, − | AO4 |
| Velocity of Approach | $V_{AP}$ | F1 |
| Direction of Tracing | +, − | AO5 |
| Velocity of Tracing | $V_{TF}$ | F2 |
| Direction of Pick Feed | +, − | |
| Velocity of Pick Feed | $V_{PF}$ | F3 |
| Quantity of Pick Feed | P | AO6 |
| Tracing Turning Position | $L_P$ | X1 |
| " | $L_N$ | X2 |
| Tracing End Position | $L_{TE}$ | Y1 |
| Automatic Return | ON, OFF | AO7 |
| Velocity of Automatic Return | $V_{AR}$ | F4 |
| Automatic Return Position | $L_{RP}$ | Z1 |
| Clamp Level Initial Position | $C_{PL}$ | CO1 |
| Clamp Level Variation | $\Delta C_{PL}$ | CO2 |
| Clamp Level Final Position | $C_{PLE}$ | CO3 |

TABLE 2

| Mode | Sub-Mode |
|---|---|
| 1 Manual Tracing | |
| 2 Both-Ways Tracing | 45° Tracing |
| 3 One-Way Tracing | |
| 4 360 Deg. Tracing | Axial-Direction Pick |
| | Z-Axis Pick |
| 5 Partial Tracing | |
| 6 Three-Dimensional Tracing | |
| 7 Clamp Tracing | |

4

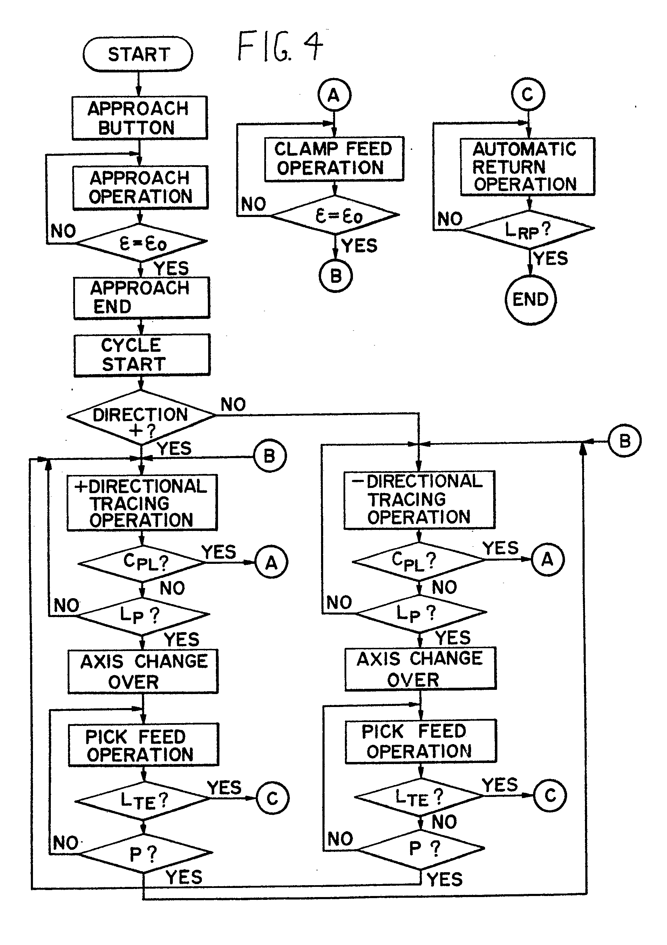

Turning now to Fig. 3, an example of tracer control as effected by means of the present invention will be described. In Fig. 3, the tracing turning points $L_P$ and $L_N$ (see Table 1) are X1 and X2; the pick feed quantity AO6 is P; the tracing end position $L_{TE}$ is Y1; the automatic return position $L_{RP}$ is Z1; and the clamp level initial position CO1 is CPL; and the stylus ST is controlled by data concerning the velocity and direction of tracing and so on so that it approaches a point $a$ from a starting point A and traces the model surface following a route $a$-$b$-$c$-...$u$-$v$ indicated in Figure 3 to effect clamp tracing in the sections $a$ to $b$, $c$ to $d$,...$t$ to $u$ and then to return automatically from the tracing end position Y1 to the automatic return position Z1. In this case, the tracing operation is controlled in accordance with a flowchart such as is depicted in Fig. 4.

Upon depression of an approach button (not shown), the processor CPU reads out data on the axis, direction and velocity of approach from the memory MEM and provides a signal via the data output unit DO to the analog gate circuit GC to activate the amplifier DRVZ, causing the servo motor MZ to lower the tracer head TR and the cutter CT. The velocity in this case can be determined by velocity data F supplied via the data output unit DO to the D-A converter DA2.

Before the stylus ST is brought into contact with the model MDL, the displacement signals $\varepsilon_x$, $\varepsilon_y$ and $\varepsilon_z$ are zero, and accordingly the difference signal $\Delta\varepsilon$ is equal to the reference deflection signal $\varepsilon_0$. When the composite displacement signal $\varepsilon$ has become equal to the deflection signal $\varepsilon_0$ as a result of contacting of the stylus ST with the model MDL, the comparator COMP detects that $\Delta\varepsilon=0$, and applies an approach end signal AE to the data input unit DI. The approach end signal AE is read by the processor CPU to detect the completion of approach, and then tracing is started.

Upon the commencement of tracing, the processor CPU reads out data concerning the mode, the reference deflection $\varepsilon_0$, the direction and velocity of tracing, to start tracer control. The reference deflection data is converted by D-A converter DA1 into an analog deflection signal $\varepsilon_0$ for input to the adder ADD, and the servo motor MX (in the case of operation as shown in Fig. 3) is driven in a direction in accordance with the direction-of-tracing data. Further, the processor CPU reads out the clamp level initial position $C_{PL}$ from the memory MEM and compares it with the content of the reversible counter CNTZ representing the current depth position of the stylus ST.

When it is detected by such comparison that the content of the reversible counter CNTZ and the clamp level initial position $C_{PL}$ match each other, the processor CPU sends out, by an interrupt operation, a start signal CL, via the data output unit DO, to the clamp feed command circuit CLP to start that circuit and, at the same time, changes over the gate circuit GC so that it passes on a clamp feed command signal from the clamp feed command circuit CLP to a predetermined one of the servo motors. By means of these operations, the stylus ST does not effect further tracing but instead is moved in a horizontal direction, and clamp feed takes place at a predetermined clamp level.

During the clamp feed, since the displacement signals $\varepsilon_x$, $\varepsilon_y$ and $\varepsilon_z$ of the stylus ST are zero, the difference signal $\Delta\varepsilon$ is equal to the deflection signal $\varepsilon_0$, but when the stylus ST again gets into contact with the model MDL (at the end of clamp feed), the composite displacement signal $\varepsilon$ becomes equal to the deflection signal $\varepsilon_0$ with the result that the difference signal $\Delta\varepsilon$ becomes zero. Upon detection of $\Delta\varepsilon=0$, the comparator COMP applies the approach end signal AE to the data input unit DI, and the processor CPU reads this approach end signal AE to detect that the stylus ST has been brought into contact with the model MDL by the clamp feed. Then, the processor CPU terminates operation of the clamp feed command circuit CLP via the data output unit DO and changes over the gate circuit GC to end clamp feed, restoring the above described tracing operations.

Further, the processor CPU reads out tracing turning positions $L_P$ and $L_N$ from the memory MEM and compares them with the content of the counter CNTX (in the case of Fig. 3). For example, in tracing in a "minus" direction "−", when the content of the reversible counter CNTX and tracing turning position $L_N$ match each other, the tracer feed axis is changed over and the processor CPU reads out data such as direction, velocity and quantity of pick feed P to control pick feed. When the content of the reversible counter CNTY (in the case of Fig. 3) becomes equal to the pick feed quantity P in the course of the pick feed operation, the processor CPU causes the stylus ST to turn again, that is, controls it to trace in a "plus" direction "+". Further, the processor CPU checks whether or not the stylus ST has reach the tracing end position, and upon detecting that a tracing end position $L_{TE}$ has been reached during pick feed, the processor CPU reads out automatic return data e.g. automatic return velocity and automatic return position $L_{RP}$, from the memory MEM. Since automatic return is ON, the servo motor MZ is driven and when the content of the reversible counter CNTZ reaches the automatic return position $L_{RP}$, one tracer control operation has been completed.

In the event that repetitive tracing has been preset by the input from the keyboard KB, for example, the processor CPU returns the stylus ST by known positioning control to the approach starting point A immediately following the automatic return operation, and then carrys out clamp tracing again. In this case, the clamp level is set at $C_{PL}+\Delta C_{PL}$ which is the sum of the aforesaid clamp level position $C_{PL}$ and a clamp level variation $\Delta C_{PL}$ prestored in the memory MEM which is determined in consideration of the cutting performance of the tool used. Since the repetitive clamp tracing can be effected by changing the clamp level automatically for each working operation as described above, it is possible to achieve machining operations continuously from rough to finish machining, thereby markedly reducing the machining time.

A maximum clamp level depth, beyond which clamp level cannot go, can also be set (see clamp level final position $C_{PLE}$ in Table 1).

The tracing turning positions $L_P$ and $L_N$, the tracing end position $L_{TE}$, the automatic return position $L_{RP}$, the pick feed P, the clamp level initial position $C_{PL}$, the clamp level variation $\Delta C_{PL}$ and the clamp level final position $C_{PLE}$ may also be obtained by setting in the memory MEM the contents of the reversible counters after the stylus ST has been shifted to those respective positions in a manual feed mode, instead of entering the data from the keyboard KB.

Also, during a tracing operation a tracing path, including a clamp level therefor, can be corrected by reloading the data in the memory MEM. For example, the data in the memory MEM is read out therefrom and displayed on display DSP and the data is corrected and reloaded by manipulation of the keyboard KB. Thus, the clamp tracing start position, i.e. the clamp level initial position $C_{PL}$, the clamp level variation $\Delta C_{PL}$ and the clamp level finish position $C_{PLE}$ can be corrected with ease.

In the apparatus described above, all data defining a tracing operation is prestored in a memory for controlling a tracing path, including a clamp feed path, but it need not be the case for all embodiments of the present invention, that all the data is always prestored; for example, tracing turning position and the like may also be controlled by a limit switch.

As has been described above, apparatus embodying the present invention permits repetitive clamp tracing by providing for an automatic change in the clamp level, by a predetermined value, for each working operation, in accordance with prestored data concerning clamp tracing, and consequently automatic machining operations can be carried out continuously from rough to finish machining with consequent reduction in working time.

Thus, apparatus embodying this invention can effect tracer control by calculating the direction and the velocity of tracing through utilization of signals from a tracer head tracing the model surface, and the apparatus is provided with an input unit for entering data defining a tracing operation, a memory for storing the entered data and a processor for reading out the entered data from the memory to control respective parts of a tracer control machine. Data concerning clamp tracing is read out by the processor to change the clamp level by a predetermined value after each tracer machining operation, thereby performing repetitive clamp tracing.

## Claims

1. Tracer control apparatus operable to control tracer machining on the basis of displacement signals ($\varepsilon_x$, $\varepsilon_y$, $\varepsilon_z$) from a 3-dimensional tracer head (TR) of tracer machining apparatus tracing a model (MDL) surface, the tracer control apparatus comprising

a memory (MEM) holding data determining tracing operations to be effected, including clamp tracing data designating an initial clamp level for clamp feed during a first tracing operation, and data determining successive further clamp levels for clamp feed during successive further tracing operations,

a processor (CPU) operable to read out data held in the memory, and in dependence upon read out data, to provide control signals for tracer machining apparatus to effect said tracing operations, and with

means (CPU, MEM, CLP) operable to control switching to clamp feed, during such a tracing operation, in dependence upon the clamp level designated for clamp feed during the tracing operation concerned, and operable to control switching from clamp feed in dependence upon said displacement signals ($\varepsilon_x$, $\varepsilon_y$, $\varepsilon_z$).

2. Tracer control apparatus as claimed in claim 1, wherein the clamp tracing data held in the memory designates an initial clamp level for clamp feed during the first tracing operation and a final clamp level, beyond which a clamp level cannot be designated.

3. Tracer control apparatus as claimed in claim 1 or 2, wherein the clamp tracing data held in the memory designates an initial clamp level and a clamp level variation, and the processor is operable to add the clamp level variation to the initial clamp level, after the first tracing operation, to provide a further clamp level for the next tracing operation, and so on.

4. Tracer control apparatus as claimed in any preceding claim, including an input unit for entering the data determining tracer machining operations into the memory.

5. Tracer control apparatus as claimed in any preceding claim, operable to effect tracer control in dependence upon tracing direction and velocity information calculated in dependence upon displacement signals received from a tracer head tracing a model surface in the tracer machining apparatus.

6. Tracer control apparatus as claimed in any preceding claim, in operative combination with the tracer machining apparatus.

## Patentansprüche

1. Kopiersteuerungsapparat zum Steuern einer Kopierbearbeitung auf der Grundlage von Ver-

rückungssignalen ($\varepsilon_x$, $\varepsilon_y$, $\varepsilon_z$) aus einem dreidimensionalen Fühlerkopf (TR) einer Kopierbearbeitungsmaschine, der die Oberfläche eines Modells (MDL) abtastet, gekennzeichnet durch

einen Speicher (MEM), der die die auszuführenden Abfühlvorgänge bestimmenden Daten speichert, welche Daten die Kopierdaten, die ein anfängliches Greifniveau für den Greifvorschub während eines ersten Abfühlvorgangs kennzeichnen, und Daten, die die weiteren aufeinanderfolgenden Greifniveaus für den Greifvorschub während der weiteren aufeinanderfolgenden Abfühlvorgänge bestimmen, enthalten,

einen Prozessor (CPU), der in der Lage ist, Daten auszulesen, die in dem Spiecher gehalten werden, und in Abhängigkeit von den ausgelesenen Daten Steuersignale für die Kopierbearbeitungsmaschine zu liefern, um die Abfühlvorgänge zu bewirken, und

Einrichtungen (CPU, MEM, CLP), die in der Lage sind, das Schalten auf den Greifvorschub während eines derartigen Abfühlvorgangs in Abhängigkeit von dem Greifniveau, das für den Greifvorschub während des betreffenden Abfühlvorgangs gekennzeichnet ist, zu steuern, und die in der Lage sind, das Schalten von dem Greifvorschub in Abhängigkeit von den Verrückungssignalen ($\varepsilon_x$, $\varepsilon_y$, $\varepsilon_z$) zu steuern.

2. Kopiersteuerungsapparat nach Anspruch 1, dadurch gekennzeichnet, daß die Kopierdaten, die in dem Speicher gehalten werden, ein anfängliches Greifniveau für den Greifvorschub während des ersten Abfühlvorgangs und ein letztes Greifniveau, über das hinaus ein Greifniveau nicht gekennzeichnet werden kann, kennzeichnen.

3. Kopiersteuerungsapparat nach Anspruch 1 oder 2, dadurch gekennzeichnet, daß die Kopierdaten, die in dem Speicher gehalten werden, ein anfängliches Greifniveau und eine Greifniveauänderung kennzeichnen und daß der Prozessor wirksam ist, um die Greifniveauänderung nach dem ersten Abfühlvorgang auf das anfängliche Greifniveau zu addieren, um ein weiteres Greifniveau für den nächsten Abfühlvorgang bereitzustellen, und so fort.

4. Kopiersteuerungsapparat nach einem der vorhergehenden Ansprüche, gekennzeichnet durch eine Eingabeeinheit zum Eingeben von Daten in den Speicher, die die Kopierbearbeitungsvorgänge bestimmen.

5. Kopiersteuerungsapparat nach einem der vorhergehenden Ansprüche, der betreibbar ist, um eine Kopiersteuerung in Abhängigkeit von einer Abfühlrichtungs- und Geschwindigkeitsinformation zu bewirken, die in Abhängigkeit von den Verrückssignalen berechnet worden ist, die von dem Fühlerkopf empfangen werden, der die Oberfläche eines Modells in der Kopierbearbeitungsmaschine abtastet.

6. Kopiersteuerungsapparat nach einem der vorhergehenden Ansprüche in wirksamer Kombination mit der Kopierbearbeitungsmaschine.

**Revendications**

1. Dispositif de commande de copiage capable de commander un usinage par copiage sur la base de signaux de déplacement ($\varepsilon_x$, $\varepsilon_y$, $\varepsilon_z$) provenant d'un palpeur tridimensionnel (TR) d'une machine-outil de copiage explorant une surface d'un modèle (MDL), le dispositif de commande de copiage comprenant:

une mémoire (MEM) conservant des données qui déterminent des opérations de copiage à effectuer, comprenant des données de copiage avec limitation qui désignent un niveau de limitation initial pour l'avance de limitation pendant une première opération de copiage, et des données qui déterminent des niveaux de limitation ultérieurs successifs pour l'avance de limitation pendant des opérations de copiage ultérieures successives,

un processeur (CPU) capable de lire des données conservées dans la mémoire et de produire, sous la dépendance des données lues, des signaux de commande commandant à la machine-outil de copiage d'effectuer lesdites opérations de copiage, et

des moyens (CPU, MEM, CLP) capables de commander un changement de mode faisant passer à l'avance de limitation, pendant une telle opération de copiage, sous la dépendance du niveau de limitation désigné pour l'avance de limitation pendant l'opération de copiage concernée, et capables de commander un changement de mode à partir de l'avance de limitation sous la dépendance des signaux de déplacement ($\varepsilon_x$, $\varepsilon_y$, $\varepsilon_z$).

2. Dispositif de commande de copiage selon la revendication 1, dans lequel les données de copiage avec limitation qui sont conservées dans la mémoire désignent un niveau de limitation initial pour l'avance de limitation pendant la première opération de copiage et un niveau de limitation final au-delà duquel aucun niveau de limitation ne peut être désigné.

3. Dispositif de commande de copiage selon la revendication 1 ou 2, dans lequel les données de copiage avec limitation qui sont conservées dans la mémoire désignent un niveau de limitation initial et une variation du niveau de limitation, et le processeur est capable d'additionner la variation du niveau

7

**0 036 458**

de limitation et le niveau de limitation initial, après la première opération de copiage, pour donner un niveau de limitation ultérieur pour l'opération de copiage suivante, et ainsi de suite.

4. Dispositif de commande de copiage selon l'une quelconque des revendications précédentes, comprenant une unité d'entrée pour introduire dans la mémoire les données qui déterminent les opérations d'usinage par copiage.

5. Dispositif de commande de copiage selon l'une quelconque des revendications précédentes, capable d'effectuer une commande de copiage sous la dépendance d'une information de direction et de vitesse de copiage calculée sur la base de signaux de déplacement reçus à partir d'un palpeur explorant une surface d'un modèle dans la machine-outil de copiage.

6. Dispositif de commande de copiage selon l'une quelconque des revendications précédentes, en combinaison fonctionnelle avec la machine-outil de copiage.

8

# FIG. 1

# FIG. 3

# FIG.2

FIG. 4